# FASCICULE DE BREVET EUROPEEN

(11) **EP 1 360 420 B1**
(45) Date de publication et mention de la délivrance du brevet: **03.01.2007**
(21) Numéro de dépôt: 02704821.4
(22) Date de dépôt: 13.02.2002
(51) Int. Cl.: F16B 21/02

(54) **Ensemble de fixation d'un élément de carrosserie sur la structure d'un véhicule automobile**
Befestigungsvorrichtung für ein Karosserieelement an der Kraftfahrzeugsstruktur
Holding Device for Fixing a Car Body Element to the Structure of a Motor Vehicle

(30) Priorité: 16.02.2001 FR 0102181
(43) Date de publication de la demande: 12.11.2003
(73) Titulaire: Peugeot Citroen Automobiles SA, 92200 Neuilly sur Seine (FR)
(72) Inventeur: PERROT, Philippe, F-25200 Montbeliard (FR)
(74) Mandataire: Lanceplaine, Jean-Claude
(86) Numéro de dépôt international: PCT/FR2002/000555
(87) Numéro de publication internationale: WO 2002/066846

(56) Documents cités:
- US-A- 4 007 516
- US-A- 4 653 970
- US-A- 5 011 356
- US-A- 5 368 427

## Description

La présente invention concerne un ensemble de fixation d'un élément de carrosserie, comme par exemple une aile, sur la structure d'un véhicule automobile .

Actuellement il existe dans l'industrie automobile de nombreuses techniques adaptées pour réaliser l'assemblage de deux pièces entre elles, telles que vissage, collage ou utilisation d'agrafes.

Les techniques de fixation par vissage nécessitent un temps de montage important et nuisent à l'esthétique de l'assemblage, les vis étant apparentes et pouvant subir une attaque corrosive.

Les techniques d'assemblage par collage présentent l'inconvénient de réaliser un assemblage définitif, les deux pièces ne pouvant plus être par la suite dissociées. De plus, des phénomènes de bavures peuvent se produire et ces techniques d'assemblage par collage nécessitent en outre un temps de séchage non négligeable.

Pour pallier à ces inconvénients, les constructeurs automobiles utilisent pour fixer les éléments de carrosserie, comme par exemple les ailes, sur la structure du véhicule automobile, des agrafes qui peuvent être intégrées à l'une des deux pièces à assembler ou rapporter sur celles-ci avant son montage.

Généralement, les agrafes utilisées jusqu'à présent comportent une tête qui est fixée sur l'aile et une partie élastiquement déformable reliée à cette tête et qui est destinée à coopérer par encliquetage avec une ouverture ménagée dans la structure du véhicule automobile, comme par exemple le document US-A-4 653 970.

Mais, les constructeurs automobiles ont de plus en plus tendance à utiliser pour les ailes avant des véhicules, des ailes dites « à mémoire de forme » qui sont par exemple en matière plastique et qui peuvent subir des déformations importantes sous l'action de contraintes mécaniques et/ou thermiques, puis reprendre leur forme initiale sans détérioration lors de l'arrêt de ces contraintes.

Or, les agrafes couramment employées ne permettent pas à l'aile de subir des déformations sous l'action de contraintes thermiques et/ou mécaniques et notamment en cas de choc à faible vitesse, c'est-à-dire inférieure à 16 km/h, si bien qu'il est presque systématiquement nécessaire de la remplacer.

De plus, le déplacement de l'aile, dans le cas notamment d'une aile en matière plastique, devient nécessaire compte tenu des contraires thermiques auxquelles est soumis le véhicule, notamment lors du passage de la carrosserie dans le poste de peinture après l'étuve « cataphorèse » en usine de peinture, sans déformation résiduelle après retour à la température ambiante.

L'invention a donc pour but de proposer un ensemble de fixation d'un élément de carrosserie, comme par exemple une aile, sur la structure du véhicule qui permet un montage simple et rapide et qui autorise les déformations de cet élément de carrosserie sous l'action de contraintes mécaniques et/ou thermiques.

L'invention a donc pour objet un ensemble de fixation d'un élément de carrosserie, comme par exemple une aile, sur la structure d'un véhicule automobile, comprenant : une agrafe de fixation comportant une platine formée par une plaque délimitant une face d'appui adaptée pour coopérer avec l'élément de carrosserie et un organe de fixation par quart de tour dans une lumière ménagée dans la structure pour le maintien du sous-ensemble formé par la platine et l'élément de carrosserie, caractérisé en ce que ladite platine comporte une lumière destinée à être montée parallèlement à l'axe longitudinal du véhicule automobile ainsi que, d'une part, des moyens d'encliquetage sur l'élément de carrosserie et, d'autre part, des moyens frangibles de libération de l'élément de carrosserie de la structure du véhicule lors d'une contrainte transversale déterminée et appliquée sur l'élément de carrosserie, et en ce que ladite lumière de la structure est située en correspondance de ladite lumière de la platine, ledit élément de carrosserie étant déplaçable dans une direction parallèle à l'axe longitudinal du véhicule.

Selon d'autres modes particuliers de réalisation de l'invention :
- les moyens d'encliquetage sur l'élément de carrosserie sont formés par au moins une patte horizontale formée sur un bord latéral d'un cadre ménagé au-dessous de la plaque et s'étendant parallèlement à la face d'appui de ladite plaque et par au moins une patte verticale disposée sur l'autre bord latéral du cadre et déformable élastiquement dans une direction parallèle à l'axe longitudinal du véhicule automobile,
- le cadre présente une forme conjuguée à une découpe en forme d'un U ménagée dans l'élément de carrosserie,
- les moyens frangibles comprennent deux languettes opposées et ménagées chacune sur un bord latéral du cadre de la plaque, chaque languette ayant la forme d'un T et étant destinée à coopérer avec un encoche formée sur un bord de ladite découpe,
- l'organe de fixation par quart de tour est formé par une tige comportant à l'une de ses extrémités une tête et à l'autre desdites extrémités deux branches opposées et recourbées vers ladite tête,
- l'organe de fixation est déplaçable par rotation entre, d'une part, une position d'introduction successivement dans une lumière ménagée sur la platine et dans la lumière de la structure et dans laquelle les branches de la tige sont parallèles à l'axe longitudinal du véhicule et, d'autre part, une position de blocage sur la structure et dans laquelle les branches de la tige sont perpendiculaires audit axe longitudinal du véhicule,
- les branches de l'organe de fixation sont élastiquement déformables par flexion par rapport à un plan passant par la tige dudit organe de fixation,
- la distance entre les extrémités libres des deux branches de l'organe de fixation est inférieure à la longueur de chaque lumière,
- la distance entre les extrémités libres des branches de l'organe de fixation est supérieure à la largeur de chaque lumière.

L'invention a également pour objet un assemblage d'un élément de carrosserie, comme par exemple une aile, sur la structure d'un véhicule automobile, caractérisé en ce qu'il est réalisé au moyen d'au moins un ensemble de fixation tel que précédemment mentionné.

D'autres caractéristiques et avantages de l'invention apparaîtront à la lecture de la description qui va suivre, donnée à titre d'exemple et faite en référence aux dessins annexés, sur lesquels :
- la figure 1 est une vue schématique en perspective d'un bloc optique et d'une aile avant montée sur la structure d'un véhicule automobile par des agrafes de fixation conformes à l'invention,
- les figures 2 et 3 sont des vues en perspective respectivement de dessus et de dessous d'un platine de l'agrafe de fixation conforme à l'invention,
- la figure 4 est une vue en perspective d'une découpe ménagée dans l'aile pour l'agrafe de fixation,
- la figure 5 est une vue en perspective d'une découpe ménagée dans l'aile pour l'agrafe de fixation,
- les figures 6 et 7 sont des vues schématiques en perspective montrant les étapes successives de montage de l'agrafe dans une lumière ménagée dans la structure du véhicule automobile.

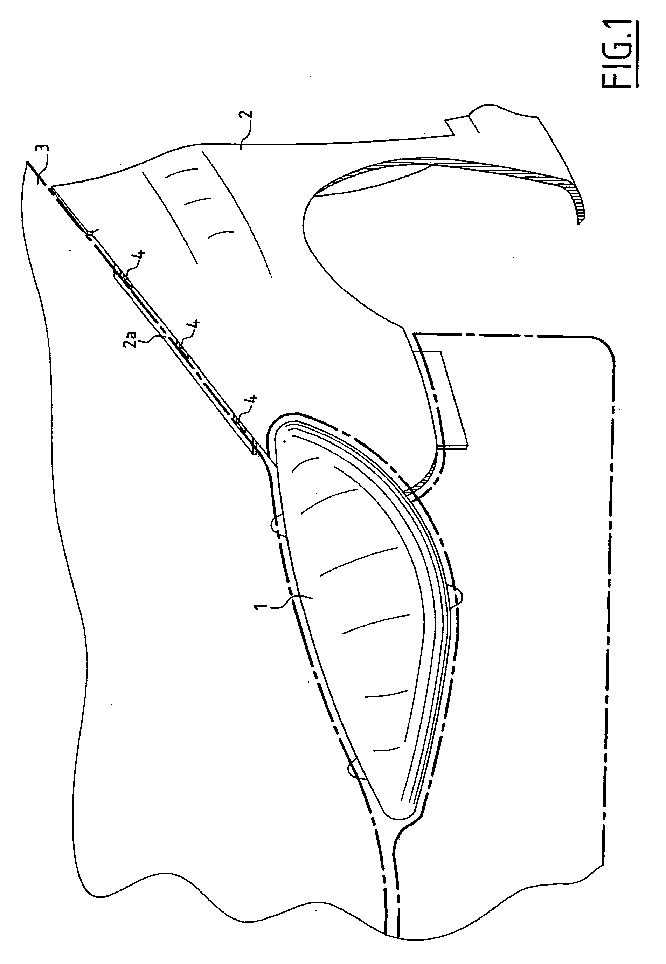

Sur la figure 1, on a représenté schématiquement un bloc optique 1 et un élément de carrosserie 2 constitué par une aile avant d'un véhicule automobile. Le bloc optique 1 est monté sur la structure du véhicule par des moyens appropriés, non représentés.

Les constructeurs automobiles utilisent de plus en plus des ailes avant dites « à mémoire de forme » comme par exemple des ailes en matière plastique, qui peuvent subir des déformations importantes sous l'action de contraintes mécaniques et/ou thermiques, puis reprendre leur forme initiale sans détérioration lors de l'arrêt de ces contraintes.

Dans l'exemple de réalisation représenté à la figure 1, l'aile 2 comporte à sa partie supérieure un rebord 2a destiné à être fixé par des agrafes conformes à l'invention sur la structure 3 formée par exemple par un renfort avant du côté de l'habitacle ou la demi-façade supérieure avant du véhicule automobile.

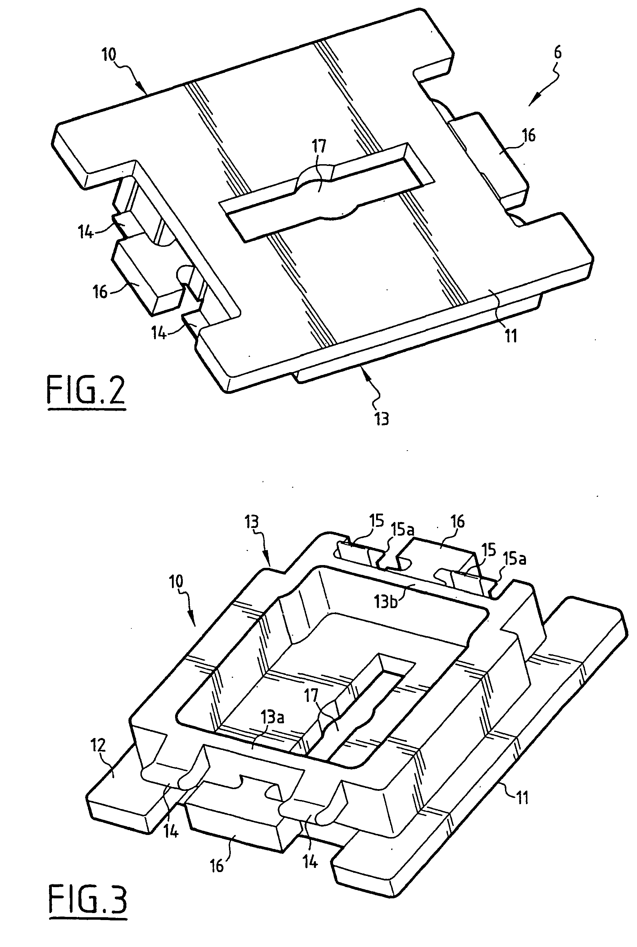

Ainsi que représenté sur les figures 2 à 4, l'agrafe de fixation désignée dans son ensemble par la référence 6 se compose de deux éléments, une platine 10 et un organe de fixation 30 par quart de tour sur la structure 3 du véhicule automobile.

En se reportant tout d'abord aux figures 2 et 3, on va décrire la platine 10.

Cette platine 10 est formée par une plaque 11 de forme générale rectangulaire et délimitant une face d'appui 12 adaptée pour coopérer avec l'élément de carrosserie 2, c'est-à-dire avec l'aile.

La plaque 11 comporte sur sa face d'appui 12, d'une part, des moyens d'encliquetage sur l'élément de carrosserie 2 et, d'autre part, des moyens frangibles de libération de l'élément de carrosserie 2 de la structure 3 du véhicule lors d'une contrainte transversale déterminée et appliquée sur l'élément de carrosserie 2.

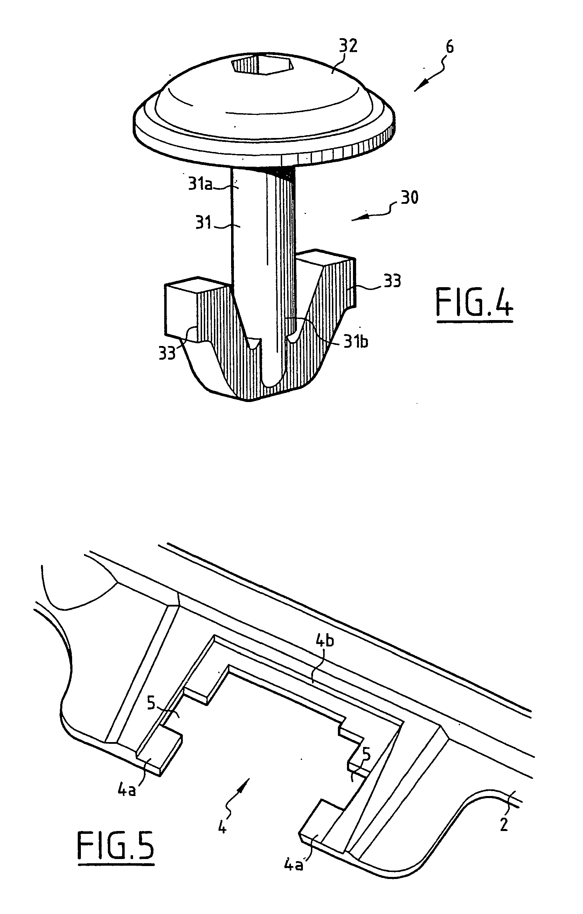

De plus, la platine 10 comporte sur la face d'appui 12 de la plaque 11 un cadre 13 qui présente une forme générale conjuguée avec une découpe 4 ménagée dans l'élément de carrosserie 2, ainsi que représenté à la figure 5.

Les moyens d'encliquetage de la platine 10 dans la découpe 4 de l'élément de carrosserie 2 sont formés par au moins une patte horizontale 14 formée sur un bord latéral 13a du cadre 13 et s'étendant parallèlement à la face d'appui 12 et par au moins une patte verticale 15 disposée sur l'autre bord latéral 13b du cadre 13 et déformable élastiquement dans une direction parallèle à l'axe longitudinal du véhicule automobile.

De préférence, les moyens d'encliquetage sont formés par deux pattes horizontales 14 et par deux pattes verticales 15.

Chaque patte verticale 15 comporte, à son extrémité libre, un rebord 15a d'accrochage sur un des bords 4a de la découpe 4.

Les moyens frangibles de libération de l'élément de carrosserie 2 de la structure 3 du véhicule lors d'une contrainte déterminée et appliquée sur cet élément de carrosserie 2, sont formés par deux languettes 16 opposées et ménagées chacune sur un des bords latéraux 13a et 13b du cadre 13 de la plaque 11, la base du T de chaque languette 16 constituant une portion de moindre résistance.

Ainsi que représenté sur les figures 2 et 3, chaque languette 16 a la forme d'un T et est destinée à être placée dans une encoche 5 ménagée sur un bord de la découpe 4 lors du montage de la platine 10 dans cette découpe 4.

Comme représenté à la figure 5, la découpe 4 ménagée dans l'élément de carrosserie 2 a la forme d'un U ce qui permet à cet élément de carrosserie 2 de se désolidariser des agrafes après la rupture des languettes 16, comme on le verra ultérieurement.

Enfin, la plaque 11 de la platine 10 comporte une lumière 17 qui, après le montage de la platine 10 dans la découpe 4 correspondante, s'étend parallèlement à l'axe longitudinal du véhicule automobile.

En se reportant maintenant à la figure 4, on va décrire l'organe de fixation 30.

Cet organe de fixation 30 est formé par une tige 31 de section par exemple circulaire et comportant à son extrémité 31 a une tête 32 et à son extrémité 31 b deux branches 33 opposées et recourbées vers ladite tête 32 et qui forment une ancre de marine.

La forme de la tête 32 de la tige 31 est déterminée pour coopérer avec un outil pour tourner d'un quart de tour l'organe de fixation 30 après son montage. A cet effet, la tête 32 peut comporter une fente pour un tournevis ou avoir une forme hexagonale creuse ou une forme extérieure hexagonale pour coopérer avec une clé de forme conjuguée.

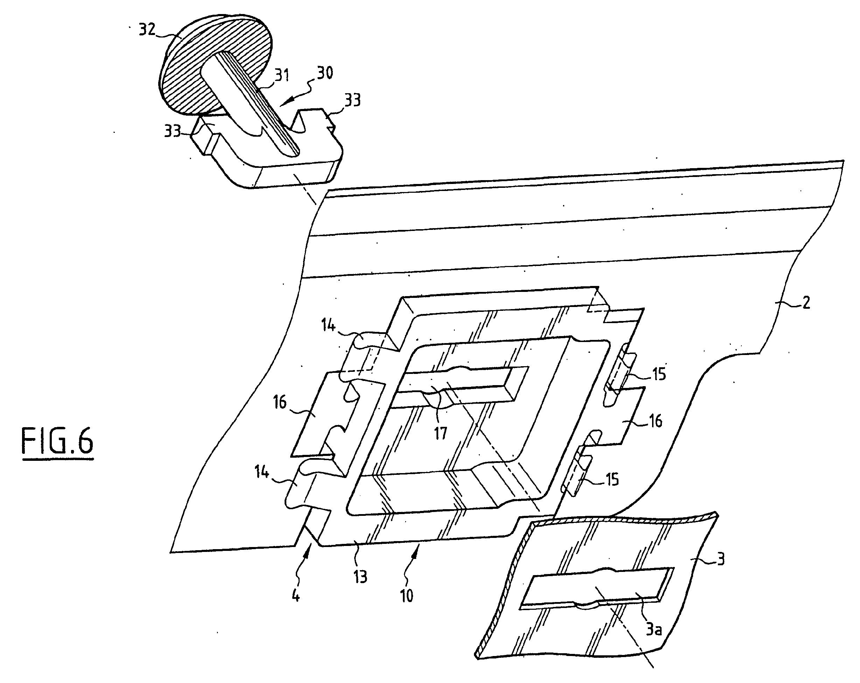

Ainsi que représenté à la figure 6, la partie de la structure 3 du véhicule destinée à recevoir l'élément de carrosserie 2 comporte au moins une lumière 3a pour la fixation de cet élément de carrosserie 2.

La distance entre les extrémités libres des branches 33 de l'organe de fixation 30 est inférieure à la longueur de la lumière 17 de la platine 10 et à la longueur de la lumière 3a de la structure 3. De plus, la distance entre les extrémités libres de ces branches 33 est supérieure à la largeur de chaque lumière 3a et 17.

Les éléments composant l'agrafe 6, c'est-à-dire la platine 10 et l'organe de fixation 30, sont en matière plastique pour la souplesse des branches 33 de cet organe de fixation 30, ainsi que pour un bon positionnement des languettes 16 de cette platine 10.

Le montage de l'agrafe de fixation 6 sur l'élément de carrosserie 2 est réalisé de la façon suivante.

Par exemple, le rebord 2a de cet élément de carrosserie 2 comporte trois découpes 4 de forme complémentaire à celle des platines 10 des agrafes 6 et chaque découpe 4 est munie d'une platine 10 montée en légère contrainte au niveau des languettes frangibles 16.

Ainsi que -représenté à la figure 6, au moment du montage de la platine 10 dans la découpe 4 correspondante, les languettes horizontales 14 sont placées au-dessous d'un des bords 4a de cette découpe 4 et ensuite chaque patte verticale 15 vient s'encliqueter sur le bord 4a opposé ce qui assure le maintien de la platine sur l'élément de carrosserie 2. Chaque languette frangible 16 est placée dans une encoche 5 ménagée sur un bord de la découpe 4.

L'élément de carrosserie 2 ainsi équipé des platines 10 chez le fournisseur et avant l'assemblage sur la caisse du véhicule en usine est ensuite transporté sur le lieu d'assemblage et placé sur la structure 3 en positionnant en vis-à-vis la lumière 17 de chaque platine 10 en regard d'une lumière 3a de ladite stru ctu re 3.

Ensuite, un organe de fixation 30 est monté dans chaque platine 10 en introduisant les branches 33 de la tige 31 successivement dans la lumière 17 de la platine 10 et dans la lumière 3a de la structure 3 de façon à appliquer la tête 32 de cette tige 31 sur la plaque 11 de ladite platine 10. Dans cette position, les branches 33 s'étendent parallèlement à l'axe longitudinal X du véhicule automobile.

Après cette première opération, l'organe de fixation 30 est tourné d'un quart de tour à l'aide d'un outil approprié coopérant avec la tête 32 de façon à placer les branches 33 de la tige 31 perpendiculairement à l'axe longitudinal X du véhicule automobile. Dans cette position, les extrémités libres des branches 33 sont en appui sur la face inférieure de la tôle de la structure 3 ce qui verrouille l'élément de carrosserie 2 sur ladite structure 3.

Lors de la rotation de l'organe de fixation, le glissement des extrémités libres des branches 33 sur la tôle de la structure 3 s'opère par déformation, puis relaxation de ces branches 33 qui s'ajustent en tension à l'épaisseur des tôles au niveau de l'emplacement de l'agrafe 6.

Les variations de température provoquent sur l'élément de carrosserie 2, notamment dans le cas où elle est réalisée dans une matière sensible à ces variations de température, des phénomènes de dilatation ou de rétraction.

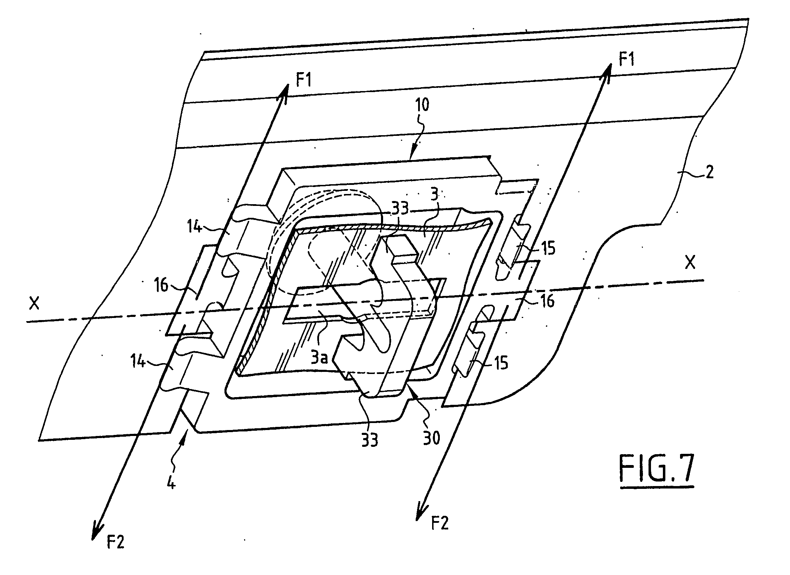

L'ensemble constitué par l'élément de carrosserie 2 et les agrafes 6 formées chacune par une platine 10 et un organe de fixation 30 et qui sont montées dans une lumière 3a longitudinale de la structure 3 autorise des déplacements de cet-ensemble dans une direction parallèle à l'axe longitudinal X du véhicule, comme représenté à la figure 7.

De plus, lors d'un choc avant, l'ensemble constitué par l'élément de carrosserie 2 et les agrafes 6 est mis en contrainte suivant une direction perpendiculaire à l'axe longitudinal X du véhicule par exemple par pivotement du phare 1. La force F1 exercée par l'élément de carrosserie sur les agrafes 6 au moment de ce choc entraîne une force résultante F2 exercée par ces agrafes 6 sur l'élément de carrosserie ce qui provoque le cisaillement des languettes frangibles 16 au-delà d'une certaine valeur de contrainte.

Le cisaillement de ces languettes frangibles 16 désolidarisent l'élément de carrosserie 2 des platines 10 et cet élément de carrosserie est libéré de la structure sans aucune détérioration. Le remontage s'effectue par simple remplacement des agrafes de fixation.

L'agrafe de fixation selon l'invention présente l'avantage d'être robuste et permet un montage simple et rapide d'un élément de carrosserie sur la structure du véhicule et une diminution importante du temps de montage ainsi que du coût.

De plus, l'agrafe de fixation selon l'invention autorise des déformations de l'élément de carrosserie sous l'action de contraintes mécaniques et/ou thermiques ce qui permet d'utiliser pour cet élément de carrosserie un matériau à mémoire de forme.

## Revendications

1. Ensemble (6; 10, 30) de fixation d'un élément de carrosserie (2), comme par exemple une aile, sur la structure (3) d'un véhicule automobile, comprenant :
- une agrafe de fixation (6) comportant une platine (10) formée par une plaque (11) délimitant une face d'appui (12) adaptée pour coopérer avec l'élément de carrosserie (2) et un organe de fixation (30) par quart de tour dans une lumière (3a) ménagée dans la structure (3) pour le maintien du sous-ensemble formé par la platine (10) et l'élément de carrosserie (2), **caractérisé en ce que** ladite platine (10) comporte une lumière (17) destinée à être montée parallèlement à l'axe longitudinal du véhicule automobile ainsi que, d'une part, des moyens (14, 15) d'encliquetage sur l'élément de carrosserie (2) et, d'autre part, des moyens frangibles (16) de libération de l'élément de carrosserie (2) de la structure (3) du véhicule lors d'une contrainte transversale déterminée et appliquée sur l'élément de carrosserie (2), et **en ce que**
- ladite lumière (3a) de la structure (3) est située en correspondance de ladite lumière (17) de la platine (10), ledit élément de carrosserie (2) étant déplaçable dans une direction parallèle à l'axe longitudinal du véhicule.

2. Ensemble de fixation selon la revendication 1, **caractérisé en ce que** les moyens d'encliquetage sur l'élément de carrosserie (2) sont formés par au moins une patte horizontale (14) formée sur un bord latéral (13a) d'un cadre (13) ménagé au-dessous de la plaque (11) et s'étendant parallèlement à la face d'appui (12) de ladite plaque (11) et par au moins une patte verticale (15) disposée sur l'autre bord latéral (13b) du cadre (13) et déformable élastiquement dans une direction parallèle à l'axe longitudinal du véhicule automobile.

3. Ensemble de fixation selon la revendication 1 ou 2, **caractérisé en ce que** le cadre (13) présente une forme conjuguée à une découpe (4) en forme d'un U ménagée dans l'élément de carrosserie (2).

4. Ensemble de fixation selon l'une quelconque des revendications précédentes, **caractérisé en ce que** les moyens frangibles comprennent deux languettes (16) opposées et ménagées chacune sur un bord latéral du cadre (13) de la plaque (11), chaque languette (16) ayant la forme d'un T et étant destinée à coopérer avec une encoche (5) formée sur un bord de ladite découpe (4).

5. Ensemble de fixation selon l'une quelconque des revendications précédentes, **caractérisé en ce que** l'organe de fixation (30) par quart de tour est formé par une tige (31) comportant à l'une (31 a) de ses extrémités une tête (32) et à l'autre (31 b) desdites extrémités deux branches (33) opposées et recourbées vers ladite tête (32).

6. Ensemble de fixation selon l'une quelconque des revendications précédentes, **caractérisé en ce que** l'organe de fixation (30) est déplaçable par rotation entre, d'une part, une position d'introduction successivement dans une lumière (17) ménagée sur la platine (10) et dans la lumière (3a) de la structure (3) et dans laquelle les branches (33) de la tige (31) sont parallèles à l'axe longitudinal du véhicule et, d'autre part, une position de blocage sur la structure (3) et dans laquelle les branches (33) de la tige (3) sont perpendiculaires audit axe longitudinal du véhicule.

7. Ensemble de fixation selon la revendication 5 ou 6, **caractérisé en ce que** les branches (33) de l'organe de fixation (30) sont élastiquement déformables par flexion par rapport à un plan passant par la tige (31) dudit organe.

8. Ensemble de fixation selon l'une quelconque des revendications 5 à 7, **caractérisé en ce que** la distance entre les extrémités libres des branches (33) de l'organe de fixation (30) est inférieure à la longueur de chaque lumière (3a ; 17).

9. Ensemble de fixation selon l'une quelconque des revendications 5 à 8, **caractérisé en ce que** la distance entre les extrémités libres des branches (33) de l'organe de fixation (30) est supérieure à la largeur de chaque lumière (3a ; 17).

10. Assemblage d'un élément de carrosserie (2), comme par exemple une aile, sur la structure (3) d'un véhicule automobile, **caractérisé en ce qu'**il est réalisé au moyen d'au moins un ensemble de fixation (6, 10, 30) selon l'une quelconque des revendications précédentes.

## Claims

1. Assembly (6; 10, 30) for attaching a bodywork element (2) such as a wing, for example, to the structure (3) of a motor vehicle, comprising:
- an attachment clip (6) comprising a base (10) formed by a plate (11) delimiting a support surface (12) adapted to cooperate with the bodywork element (2) and a member (30) for attachment by a quarter turn in an opening (3a) formed in the structure (3) for holding the sub-assembly formed by the base (10) and the bodywork element (2), **characterised in that** the base (10) comprises an opening (17) adapted to be arranged parallel to the longitudinal axis of the motor vehicle as well as, on the one hand, means (14, 15) for latching to the bodywork element (2) and, on the other hand, frangible means (16) for releasing the bodywork element (2) from the structure (3) of the vehicle in the event of a specified transverse stress applied to the bodywork element (2), and **in that**
- the opening (3a) in the structure (3) registers with the opening (17) in the base (10), said bodywork element (2) being movable in a direction parallel to the longitudinal axis of the vehicle.

2. Attachment assembly according to claim 1, **characterised in that** the latching means to the bodywork element (2) are formed by at least one horizontal lug (14) formed on a side edge (13a) of a frame (13) provided underneath the plate (11) and extending parallel to the support surface (12) of said plate (11), and by at least one vertical lug (15) arranged on the other side edge (13b) of the frame (13) and resiliently deformable in a direction parallel to the longitudinal axis of the motor vehicle.

3. Attachment assembly according to claim 1 or 2, **characterised in that** the frame (13) has a shape mating with a U-shaped cut-out (4) formed in the bodywork element (2).

4. Attachment assembly according to any one of the preceding claims, **characterised in that** the frangible means comprise two opposing tabs (16) each provided on a side edge of the frame (13) of the plate (11), each tab (16) being T-shaped and being adapted to cooperate with a notch (5) formed on an edge of said cut-out (4).

5. Attachment assembly according to any one of the preceding claims, **characterised in that** the quarter-turn attachment member (30) is formed by a rod (31) which has, at one end (31a), a head (32) and, at the other end (31b), two opposing branches (33) curved towards said head (32).

6. Attachment assembly according to any one of the preceding claims, **characterised in that** the attachment member (30) is movable by rotation between, on the one hand, a position of insertion into, in succession, an opening (17) formed on the base (10) and into the opening (3a) in the structure (3) and wherein the branches (33) of the rod (31) are parallel to the longitudinal axis of the vehicle and, on the other hand, a blocking position on the structure (3), wherein the branches (33) of the rod (3) are perpendicular to said longitudinal axis of the vehicle.

7. Attachment assembly according to claim 5 or 6, **characterised in that** the branches (33) of the attachment member (30) are resiliently deformable by bending relative to a plane passing through the rod (31) of said member.

8. Attachment assembly according to any one of claims 5 to 7, **characterised in that** the distance between the free ends of the branches (33) of the attachment member (30) is less than the length of each opening (3a; 17).

9. Attachment assembly according to any one of claims 5 to 8, **characterised in that** the distance between the free ends of the branches (33) of the attachment member (30) is greater than the width of each opening (3a; 17).

10. Mounting of a bodywork element (2) such as a wing, for example, on the structure (3) of a motor vehicle, **characterised in that** it is carried out using at least one attachment assembly (6, 10, 30) according to any one of the preceding claims.

## Patentansprüche

1. Anordnung (6; 10, 30) zum Befestigen eines Karosserieelements (2) wie beispielsweise eines Kotflügels an der Struktur (3) eines Kraftfahrzeugs, die umfasst:
- einen Befestigungshaken (6), der eine Platine (10) aufweist, die durch eine Platte (11) gebildet ist, die eine Abstützfläche (12) begrenzt, die so beschaffen ist, dass sie mit dem Karosserieelement (2) und mit einem Befestigungselement (30) durch eine Vierteldrehung in einem in der Struktur (3) ausgesparten Langloch (3a) zusammenwirken kann, um die durch die Platine (10) und das Karosserieelement (2) gebildete Unteranordnung zu halten, **dadurch gekennzeichnet, dass** die Platine (10) ein Langloch (17) aufweist, das dazu vorgesehen ist, parallel zur Längsachse des Kraftfahrzeugs montiert zu werden, und einerseits Mittel (14, 15) zum Einrasten an dem Karosserieelement (2) und andererseits zerbrechbare Mittel (18) für die Freigabe des Karosserieelements (2) von der Struktur (3) des Fahrzeugs bei einer bestimmten transversalen Beanspruchung, die auf das Karosserieelement (2) ausgeübt wird, aufweist, und dass
- das Langloch (3a) der Struktur (3) entsprechend dem Langloch (17) der Platine (10) angeordnet ist, wobei das Karosserieelement (2) in einer Richtung parallel zur Längsachse des Fahrzeugs verschiebbar ist.

2. Befestigungsanordnung nach Anspruch 1, **dadurch gekennzeichnet, dass** die Mittel zum Einrasten an dem Karosserieelement (2) gebildet sind durch wenigstens einen horizontalen Ansatz (14), der an einem Seitenrand (13a) eines unter der Platte (11) ausgebildeten Rahmens (13) ausgebildet ist und sich parallel zur Abstützfläche (12) der Platte (11) erstreckt, und durch wenigstens einen vertikalen Ansatz (15), der an dem anderen Seitenrand (13b) des Rahmens (13) angeordnet ist und in einer Richtung parallel zur Längsachse des Kraftfahrzeugs elastisch verformbar ist.

3. Befestigungsanordnung nach Anspruch 1 oder 2, **dadurch gekennzeichnet, dass** der Rahmen (13) eine Form besitzt, die einem Ausschnitt (4) in Form eines U zugeordnet ist, der in dem Karosserieelement (2) ausgespart ist.

4. Befestigungsanordnung nach einem der vorhergehenden Ansprüche, **dadurch gekennzeichnet, dass** die zerbrechbaren Mittel zwei gegenüberliegende Zungen (16) umfassen, die jeweils in einem Seitenrand des Rahmens (13) der Platte (11) ausgebildet sind, wobei jede Zunge (16) die Form eines T besitzt und dazu bestimmt ist, mit einer Nut (5), die in einem Rand des Ausschnitts (4) ausgebildet ist, zusammenzuwirken.

5. Befestigungsanordnung nach einem der vorhergehenden Ansprüche, **dadurch gekennzeichnet, dass** das Organ (30) für eine Befestigung durch eine Vierteldrehung durch einen Stift (31) gebildet ist, der an einem (31 a) seiner Enden einen Kopf (32) und am anderen (31b) seiner Enden zwei zueinander entgegengesetzte und zum Kopf (32) umgebogene Schenkel (33) aufweist.

6. Befestigungsanordnung nach einem der vorhergehenden Ansprüche, **dadurch gekennzeichnet, dass** das Befestigungsorgan (30) durch eine Drehung einerseits zwischen einer Position zum aufeinander folgenden Einführen in ein in der Platine (10) ausgespartes Langloch (17) und in das Langloch (3a) der Struktur (3), in der die Schenkel (33) des Stifts (31) zur Längsachse des Fahrzeugs parallel sind, und andererseits einer Position für eine Blockierung an der Struktur (3), in der die Schenkel (33) des Stifts (3) zu der Längsachse des Fahrzeugs senkrecht sind, verlagerbar ist.

7. Befestigungsanordnung nach Anspruch 5 oder 6, **dadurch gekennzeichnet, dass** die Schenkel (33) des Befestigungsorgans (30) durch Biegen in Bezug auf eine durch den Stift (31) des Organs verlaufende Ebene elastisch verformbar sind.

8. Befestigungsanordnung nach einem der Ansprüche 5 bis 7, **dadurch gekennzeichnet, dass** der Abstand zwischen den freien Enden der Schenkel (33) des Befestigungsorgans (30) kleiner ist als die Länge jedes Langlochs (3a; 17).

9. Befestigungsanordnung nach einem der Ansprüche 5 bis 8, **dadurch gekennzeichnet, dass** der Abstand zwischen den freien Enden der Schenkel (33) des Befestigungsorgans (30) größer ist als die Breite jedes Langlochs (3a; 17).

10. Montage eines Karosserieelements (2) wie beispielsweise eines Kotflügels an der Struktur (3) eines Kraftfahrzeugs, **dadurch gekennzeichnet, dass** sie mittels wenigstens einer Befestigungsanordnung (6, 10, 30) nach einem der vorhergehenden Ansprüche ausgeführt wird.
